# EUROPÄISCHE PATENTSCHRIFT

(11) **EP 3 075 511 B1**
(45) Veröffentlichungstag und Bekanntmachung des Hinweises auf die Patenterteilung: **25.09.2019**
(21) Anmeldenummer: 16154959.7
(22) Anmeldetag: 10.02.2016
(51) Int. Cl.: B29C 43/46, B29C 59/04, F16C 13/00, B29C 35/08, B29K 105/00, B29C 48/88

(54) **WALZE**
ROLLER
ROULEAU

(30) Priorität: 31.03.2015 DE 102015104992
(43) Veröffentlichungstag der Anmeldung: 05.10.2016
(73) Patentinhaber: Breyer GmbH Maschinenfabrik, 78224 Singen (DE)
(72) Erfinder: GULDE, Jürgen, 88682 Salem (DE)
(74) Vertreter: Patentanwälte und Rechtsanwalt Weiß, Arat & Partner mbB

(56) Entgegenhaltungen:
- DE-A1- 10 034 933
- JP-A- 2002 268 432
- JP-A- 2013 045 792

## Beschreibung

Die Erfindung betrifft eine Walze nach dem Oberbegriff von Anspruch 1.

### Stand der Technik

In vielen industriellen Bereichen werden Walzen benötigt. Mit diesen Walzen werden beispielsweise Werkstücke bearbeitet, indem die Werkstücke zwischen zwei Walzen hindurchgequetscht werden. Auf diese Weise erfolgt beispielsweise die Verringerung der Dicke von Metallblöcken, z.B. Aluminiumblöcken.

Walzen dienen aber auch dazu, Werkstoffe zu führen. Dies gilt beispielsweise für Folienbahnen.

Durch Walzen können aber auch Werkstoffe thermisch behandelt werden, d.h., die Werkstoffe werden erwärmt und/oder gekühlt. Dabei unterliegen diese Walzen erheblichen Temperaturunterschieden, was infolge der unterschiedlichen Wärmeausdehnungen zu erheblichen Spannungen in einer Walze führt.

Beispielsweise zeigt die DE 10 2004 033 234 A1 ein Verfahren zum Betreiben eines Walzenglättwerkes für Kunststoffschmelzen mit einer nachgeschalteten Rollbahn, wobei in dem Walzenglättwerk eine Mehrzahl von Walzen vorgesehen sind, die zusammenwirken.

Ferner wird in der DE 10 2009 054 165 A1 eine Glättwerkswalze für die Bearbeitung von extrudierten Kunststoffschmelzen, insbesondere Folien, beschrieben, die aus einer Innenwalze und einem die Innenwalze umschließenden Mantel besteht. Dabei ist in dem Mantel ein Material angeordnet, welches magnetisch verfestigbar ist.

In der DE 10 2005 017 184 B4 wird eine Walze zum Glätten und/oder Kühlen einer Kunststoffbahn beschrieben, wobei ein Walzenkern von einer Mantelschicht umschlossen wird. Dabei befindet sich zwischen der Mantelschicht und dem Walzenkern eine elastische Zwischenschicht. In dieser Zwischenschicht soll eine Temperierung angeordnet sein.

Die JP 2002 268432 A betrifft die Herstellung von einer Tonerwalze.

In der DE 10034933 A1 ist eine Walze für technische oder grafische Anwendungen offenbart, die weitestgehend aus nicht- metallischen Werkstoffen hergestellt und für ein Einwegverfahren verwendbar sein soll.

Weiterhin bezieht sich die JP 2013 045792 A auf Eine Walze, die aus einem zylindrischen Basismaterial besteht, auf dem sich eine Beschichtung befindet, durch welche das UV-Licht absorbiert wird. Das Basismaterial besteht bevorzugt aus einem UV durchlässigen bzw. dieses Licht übertragenden Material, insbesondere aus einem Glasmaterial, welches diese Durchlässigkeit bzw. Übertragbarkeit gewährleistet.

### Aufgabe

Aufgabe der vorliegenden Erfindung ist es, eine Walze anzubieten, bei der Temperaturspannungen keine Rolle mehr spielen, die aber auch ohne Schwierigkeiten am Umfang unterschiedlich temperiert werden kann.

### Lösung der Aufgabe

Zur Lösung der Aufgabe führen die Merkmale des Anspruchs 1.

Glaskeramiken sind Werkstoffe, die aus Glasschmelzen durch gesteuerte Kristallisation hergestellt werden. Sie haben den unschätzbaren Vorteil, dass bei ihrer Temperierung im Bereich von -100°C bis + 300°C keine Wärmeausdehnung stattfindet. Das bedeutet, dass sie sich weder verziehen, noch durchbiegen. Eine bevorzugte Glaskeramik ist unter der Marke Zerodur der Firma Schott AG auf dem Markt.

Bei dem Kern aus Glaskeramik kann es sich dabei um einen Vollkern handeln oder aber auch um einen rohrförmigen Kern, dem z.B. im Inneren ein Kühlmittel zugeführt werden kann. Natürlich kann der Kern auch entsprechende Führungskanäle für ein Temperiermittel aufweisen.

Auf diesen Kern wird ein Werkstoff aufgebracht, der temperierbar ist und der gewährleistet, dass die Temperierung auf den zu behandelnden oder zu führenden Werkstoff übertragen wird. Hier wird ein entsprechendes Metall verwendet, welches z.B. auf den Kern aufgedampft werden kann. Beispielsweise ist hier an Kupfer, Aluminium oder eine Aluminiumslegierung gedacht. Insbesondere werden Metalle verwendet, die magnetisch bzw. magnetisierbar sind. Dies sind aber nur Beispiele, die Erfindung ist darauf nicht beschränkt.

Vor allem ist auch daran gedacht, dass der Mantel von aussen temperiert werden kann. Dies kann induktiv oder z.B. auch durch Rotlicht erfolgen. Erfolgt die Temperierung induktiv, so muss es sich bei dem Mantel um einen Werkstoff handeln, welcher induktiv erwärmbar ist.

Damit ergibt sich insgesamt folgende Wärmebilanz:
Die zu bearbeitende Kunststoffbahn ist ein schlechter Wärmeleiter. Dies wird dadurch ausgeglichen, dass diese Kunststoffbahn mit dem Mantel aus einem Werkstoff mit guter Wärmeleitfähigkeit in Kontakt kommt, was dazu führt, dass die Wärme aus dem Kunststoff schnell in den Mantel abgeleitet wird. Der Mantel wird somit in etwa auf die Temperatur der Kunststoffbahn gebracht und bleibt auch auf dieser Temperatur, da eine Abfuhr der Temperatur in den Kern infolge der sehr schlechten Wärmeleitfähigkeit der Glaskeramik äusserst verzögert wird.

Sollte nun aber doch eine schnellere Abfuhr der Temperatur gewünscht werden, so sind in der Glaskeramik Kanäle zum Führen eines Temperiermediums vorgesehen. Hierdurch ist eine sehr genaue Steuerung des Temperaturhaushalts der gesamten Walze möglich.

In einem besonders bevorzugten Ausführungsbeispiel weist der Mantel an seiner Oberfläche eine Struktur auf. Diese Struktur besteht aus Bergen und Tälern, sie kann geordnet oder ungeordnet sein. Beispielsweise ist an eine Prismenstruktur zu denken, die dann auch in die Kunststoffbahn eingeformt wird.

Diese Struktur auf der metallischen Schicht hat den grossen Vorteil, dass die Unterschiede zwischen Höhen und Tiefen sehr gross sein können, so dass die Metallschicht auch sehr tief in die Kunststoffbahn eindringen kann. Vor allem bei der Herstellung von Kunststoffschichten für Bildschirme und Leuchten hat dies erhebliche Vorteile, da die Brechung des Lichts, das wahlweise von hinten oder von der Seite her in die Flachbildschirme eingebracht wird, begünstigt wird. Noch heute werden derartige Bildschirme gelasert, was einen erheblichen Aufwand bedeutet. Dieser kann durch das Einformen der Struktur in die Kunststoffbahn vermindert werden bzw. ganz entfallen.

## Patentansprüche

1. Walze zum Bearbeiten einer Kunststoffschmelze bei der Herstellung einer Kunststoffbahn oder eines Kunststoffprofils, mit einem Kern und zumindest einem Mantel, wobei Kanäle im Kern zum Führen eines Temperiermediums vorgesehen sind,
**dadurch gekennzeichnet,**
**dass** der Kern aus Glaskeramik und der Mantel aus einem Metall bestehen.

2. Walze nach Anspruch 1, **dadurch gekennzeichnet, dass** der Mantel auf den Kern aufgebracht ist.

3. Walze nach wenigstens einem der vorhergehenden Ansprüche, **dadurch gekennzeichnet, dass** der Mantel magnetisch bzw. magnetisierbar ist.

4. Walze nach wenigstens einem der vorhergehenden Ansprüche, **dadurch gekennzeichnet, dass** der Mantel eine Struktur aufweist.

## Claims

1. Roller for processing a plastic melt in the production of a plastic web or a plastic profile, having a core and at least one shell, channels being provided in the core for guiding a tempering medium,
**characterized in**
**that** the core consists of glass ceramic and the jacket of a metal.

2. Roller according to claim 1, **characterised in that** the shell is applied to the core.

3. Roller according to at least one of the preceding claims, **characterized in that** the shell is magnetic or magnetisable.

4. Roller according to at least one of the preceding claims, **characterized in that** the shell has a structure.

## Revendications

1. Rouleau pour le traitement d'un matériau plastique fondu lors de la fabrication d'une bande de matériau plastique ou d'un profilé en matériau plastique, avec un noyau et au moins un revêtement, dans lequel des canaux sont prévus dans le noyau pour guider un fluide de régulation de température,
**caractérisé par le fait**
**que** le noyau est réalisé en vitrocéramique et le revêtement est réalisé en métal.

2. Rouleau selon la revendication 1, **caractérisé par le fait que** le revêtement est appliqué sur le noyau.

3. Rouleau selon au moins l'une des revendications précédentes, **caractérisé par le fait que** le revêtement est magnétique ou magnétisable.

4. Rouleau selon au moins l'une des revendications précédentes, **caractérisé par le fait que** le revêtement présente une structure.
